# EUROPÄISCHE PATENTSCHRIFT

(11) **EP 3 927 995 B1**
(45) Veröffentlichungstag und Bekanntmachung des Hinweises auf die Patenterteilung: **31.07.2024**
(21) Anmeldenummer: 20706676.2
(22) Anmeldetag: 19.02.2020
(51) Int. Cl.: F16F 1/04, F16F 3/04, F16F 15/123

(54) **DREHSCHWINGUNGSDÄMPFER MIT EINER SCHRAUBENFEDERANORDNUNG**
TORSIONAL VIBRATION DAMPER COMPRISING A COIL SPRING ASSEMBLY
AMORTISSEUR DE VIBRATION DE TORSION COMPRENANT UN ASSEMBLAGE DE RESSORTS HÉLICOÏDAUX.

(30) Priorität: 20.02.2019 DE 102019202296; 17.02.2020 DE 102020201916
(43) Veröffentlichungstag der Anmeldung: 29.12.2021
(73) Patentinhaber: ZF Friedrichshafen AG, 88046 Friedrichshafen (DE)
(72) Erfinder: CEGAR, Stojan, 97493 Bergrheinfeld (DE); MANTEL, Johannes, 97469 Gochsheim (DE); KRÜGER, Thomas, 97532 Üchtelhausen (DE); SHAUM, Johnathon, Northville, MI 48168 (US); WACK, Erwin, 97464 Niederwerrn (DE); KENSY, Mario, 97762 Hammelburg (DE); ALBERT, Matthias, 97493 Bergrheinfeld (DE); MUNRO, Branka, Northville, MI 48168 (US); WICKEL, Christian, 97797 Wartmannsroth (DE)
(86) Internationale Anmeldenummer: PCT/EP2020/054274
(87) Internationale Veröffentlichungsnummer: WO 2020/169625

(56) Entgegenhaltungen:
- DE-A1- 102011 109 262
- DE-A1- 102014 215 138
- FR-A1- 2 775 745
- FR-A1- 2 790 808
- FR-A1- 2 902 165
- FR-B1- 2 790 808

## Beschreibung

Die vorliegende Erfindung betrifft einen Drehschwingungsdämpfer für einen Antriebsstrang eines Kraftfahrzeuges. Drehschwingungsdämpfer für einen Antriebsstrang eines Kraftfahrzeuges wie beispielsweise ein Zweimassendämpfer bzw. ein Zweimassenschwungrad (ZMS) sind an sich bekannt. Diese werden beispielsweise in einem Antriebsstrang eines Fahrzeugs verwendet, um hier beispielsweise von einem Motor eingeleitete Drehungleichförmigkeiten, welche zu Drehschwingungen führen können, zu dämpfen. Dabei umfasst der Drehschwingungsdämpfer vorwiegend ein Primärelement sowie ein, gegen einen Energiespeicher verdrehbares Sekundärelement. Dabei wird der Energiespeicher vorwiegend von Schraubendruckfedern gebildet. Dabei ist weiter bekannt, dass die Schraubendruckfedern gerade oder auch gebogen ausgeführt sein können. Auch ist bekannt, dass zwei Schraubendruckfedern parallel geschaltet sind, wobei innerhalb einer Schraubendruckfeder, hier eine Außenfeder, eine weitere Schraubendruckfeder, hier eine Innenfeder, angeordnet ist. Dabei sind beide Schraubendruckfedern auch als Bogenfedern, also vorgebogen, ausgehführt. Dies bedeutet, dass die Schraubendruckfeder in einem nicht montierten Zustand bereits eine gebogene Form vorsieht. Jedoch ist die Herstellung einer Bogenfeder kostenintensiv.

Ein vergleichbarer Drehschwingungsdämpfer ist mit der FR 2 775 745 A1 offenbart.

Es ist daher die Aufgabe der vorliegenden Erfindung einen Drehschwingungsdämpfer vorzusehen, wobei der Drehschwingungsdämpfer zumindest eine Schraubendruckfedereinheit vorsieht, wobei die Schraubendruckfedereinheit zumindest zwei parallel wirkende und koaxial angeordnete Schraubendruckfedern vorsieht, wobei die Schraubendruckfedern in einem verbauten Zustand gebogen sind und wobei die Schraubendruckfedereinheit kostengünstig zu fertigen ist und sicher funktioniert.

Erfindungsgemäß wird die Aufgabe gelöst durch einen Drehschwingungsdämpfer für einen Antriebsstrang eines Kraftfahrzeuges, umfassend ein um eine Drehachse (A) drehbares Primärelement und ein, gegen einen Energiespeicher relativ zu dem Primärelement verdrehbares Sekundärelement, wobei der Energiespeicher eine Schraubendruckfedereinheit umfasst, wobei die Schraubendruckfedereinheit in einem Federkanal vorgesehen ist und wobei die Schraubendruckfedereinheit eine Außenfeder umfasst, wobei die Außenfeder als eine Bogenfeder ausgeführt ist und wobei innerhalb der Außenfeder und nahezu koaxial zu der Außenfeder eine Innenfeder vorgesehen ist, wobei die Innenfeder in einem aus der Schraubendruckfedereinheit ausgebauten Zustand als eine gerade Schraubendruckfeder ausgeführt ist, wobei die Innenfeder eine Windungsrichtung hat, die entgegengesetzt zu einer Windungsrichtung der Außenfeder ist und wobei die Innenfeder in einem in dem Drehschwingungsdämpfer eingebauten Zustand um einen Wert x kürzer ist, als die Außenfeder, wobei der Wert x kleiner oder gleich Außendurchmesser (DaA) der Außenfeder (10) ist.. Dabei sei hier erwähnt, dass die Bogenfeder eine Schraubendruckfeder ist, die in einem ausgebauten Zustand gebogen ist, also sich entlang eines Krümmungsradius axial erstreckt. Innerhalb dieser Bogenfeder ist eine gerade Schraubendruckfeder als Innenfeder vorgesehen. Dabei ergeben die als Bogenfeder ausgeführte Außenfeder und die als gerade Schraubendruckfeder ausgeführt Innenfeder die Schraubendruckfedereinheit. Dabei ist weiter zu erwähnen, dass eine gerade Schraubendruckfeder kostengünstiger und einfacher herzustellen ist, als eine Bogenfeder. Von daher können durch die Verwendung einer geraden Schraubendruckfeder als Innenfeder Herstellungskosten reduziert werden. Um auch die sichere Funktion der Schraubendruckfedereinheit sicherzustellen sind weitere Merkmale entscheidend. Dabei sei hier erwähnt, dass bei dieser Kombination von einer Bogenfeder als Außenfeder und einer geraden Schraubendruckfeder als Innenfeder die Innenfeder kürzer ausgeführt ist. Dabei ist es vorteilhaft, dass die Innenfeder um einen Wert x kürzer ausgeführt ist, wobei der Wert x der Außendurchmesser der Außenfeder ist oder kleiner. Durch diese Auslegung der Schraubendruckfedereinheit kann eine vorteilhafte Funktionssicherheit erreicht werden. Weiter sein hier erwähnt, dass die entgegengesetzte Windungsrichtung von der Außenfeder zu der Innenfeder dazu vorteilhaft ist, dass die Windungen der Federn sich im Betrieb nicht ineinander verhaken.

Weiter kann es vorgesehen sein, dass die Innenfeder im ausgebauten Zustand in einer axialer Staffelung zumindest einen ersten Federbereich, einen zweiten Federbereich und einen dritten Federbereich vorsieht, wobei der erste und der dritte Federbereich am jeweiligen Ende der Innenfeder ist und wobei der zweite Federbereich der mittlere Federbereich ist. Dabei sieht der erste Federbereich einen ersten Windungsabstand und der zweite Federbereich einen zweiten Windungsabstand und der dritte Federbereich einen dritten Windungsabstand vor, wobei der erste und der dritte Windungsabstand kürzer ist als der zweite Windungsabstand. Dabei kann weiter ein Verlauf des ersten, des zweiten oder des dritten Windungsabstands für den jeweiligen Federbereich konstant oder progressiv oder degressiv verlaufen.

Auch kann es sein, dass ein Außendurchmesser des ersten und des dritten Federbereichs der Innenfeder sich zum jeweiligen Federende hin reduziert. Dabei kann durch das sogenannte Einziehen der Federenden und bei einer Verwendung von einem Federteller mit einem Federtellerzapfen für die Innenfeder erreicht werden, dass sich die Innenfeder am Federtellerzapfen mit der jeweils ersten Windung abstützt. Hierdurch kann es vermieden werden, dass die Federenden der Innenfeder in Kontakt zu der Au-ßenfeder kommen. Voraussetzung hierfür ist jedoch, dass sich dann der Federteller am Federkanal abstützt.

Wie bereits erwähnt können die beiden Federenden der Innenfeder mittels jeweils eines Federtellers radial geführt werden.

Dennoch wird im Betrieb die Innenfeder zumindest teilweise mit der Außenfeder in Kontakt kommen. Die kann vornehmlich den zweiten Federbereich der Innenfeder betreffen, also den mittleren Bereich, der durch Fliehkraft und/oder auch durch eine Kompression der Innenfeder nach Außen gegen die Innenwindung der Außenfeder gedrückt wird. Dabei können die Innenfeder und die Außenfeder an den Kontaktstellen zueinander reiben. Um hier einen möglichen Verschleiß zu reduzieren kann es vorteilhaft sein, dass die Außenfeder und/oder die Innenfeder durch ein Härteverfahren oberflächenbehandelt sind. Durch die härtere Oberfläche kann an den Kontaktstellen von Innenfeder zu Außenfeder der Verschleiß verringert werden. Dabei kann vorteilhaft ein ein Nitrierverfahren als Härteverfahren verwendet werden.

Weiter kann es vorgesehen sein, dass zumindest eine der beiden Federendspitzen im eingebauten Zustand sich radial außen befindet oder sich zumindest nahezu radial au-ßen befindet. Dies bedeutet, dass die Innenfeder bei dem Einbau in die Schraubendruckfedereinheit sich in einem ausgerichteten Zustand befindet, bei dem zumindest ein Federende mit der Federendspitze nach radial außen oder nahezu nach radial außen zeigt. In einer vorteilhaften Ausführung ist die Innenfeder so auszuführen, dass beiden Federendspitzen im eingebauten Zustand in die Schraubendruckfedereinheit nach radial außen oder zumindest nahezu nach radial außen zeigen. Hierdurch haben Versuche bestätigt, dass die Haltbarkeit der Innenfeder, speziell an den Federenden, verbessert werden kann. Dabei ist darauf zu achten, dass auch im Betrieb die Federendspitzen nach außen oder nahezu nach außen zeigen und sich die Innenfeder im Betrieb nicht um ihre Längsachse verdreht. Diese Sicherung kann vorteilhaft mit den voran bereits beschriebenen Federteller gewährleistet werden, indem die Federenden auf die Federtellerzapfen nahezu spielfrei aufgenommen sind.

Weiter kann es vorgesehen sein, dass die Schraubendruckfedereinheit, bestehend aus zumindest der Außenfeder und der Innenfeder, im ausgebauten Zustand einen Krümmungsradius hat, der nahezu gleich oder gleich einem Krümmungsradius des Federkanals ist. Dies ist vorteilhaft, da dann die Schraubendruckfedereinheit im eingebauten Zustand ebenfalls nahezu den Krümmungsradius vorsieht, den auch der Federkanal aufweist. Hierdurch können zusätzliche Spannungen an der Schraubendruckfedereinheit reduziert werden.

Dabei kann weiterhin ein Abstand zwischen dem Außendurchmesser der Innenfeder und dem Innendurchmesser der Außenfeder zwischen 1 % und 9% des Außendurchmessers der Außenfeder betragen. Dies bedeutet, dass ein Spiel in radialer Richtung zwischen der Innenfeder und der Außenfeder vorteilhaft 1% bis 9% des Außendurchmessers der Außenfeder ist.

Nachfolgend wird die Erfindung beispielhaft beschrieben. Dabei zeigt die
- Fig. 1: einen erfindungsgemäßen Drehschwingungsdämpfer.
- Fig. 2: eine Schraubendruckfedereinheit.
- Fig. 3: eine gerade Innenfeder.
- Fig. 4: eine Schraubendruckfedereinheit mit Federteller
- Fig. 5: eine Schraubendruckfedereinheit mit Federteller

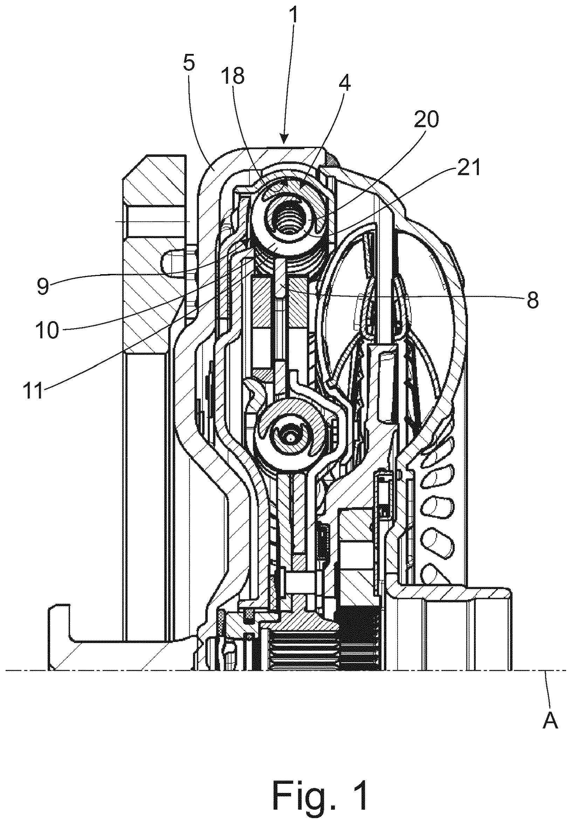

Die Figur 1 zeigt einen erfindungsgemäßen Drehschwingungsdämpfer 1 mit einem Primärlement 5 und einem Sekundärelement 8. Dabei sind das Primärelement 5 und das Sekundärelement 8 gegen die Kraft eines Energiespeichers 4, hier eine Schraubendruckfedereinheit 9 relativ zueinander verdrehbar. Dabei umfasst die Schraubendruckfedereinheit zumindest eine Außenfeder 10 und eine koaxial zu der Außenfeder vorgesehene Innenfeder 20, wobei sich die Außenfeder 10 nach radial außen an einem Federkanal 18 abstützt. Dabei wirken die beiden Federn 10, 20 parallel. Dabei ist hier die Außenfeder als eine Bogenfeder 11 ausgeführt und die Innenfeder als eine gerade Schraubendruckfeder 21. Der Vollständigkeit halber sei hier erwähnt, dass es sich bei der Bogenfeder um eine Schraubendruckfeder handelt, die auch in einem ausgebauten Zustand gebogen ist, also einen Krümmungsradius aufweist. Hingegen ist die Innenfeder 20 als gerade Schraubendruckfeder ausgeführt, was von den Herstellungskosten günstiger ist, als eine Bogenfeder.

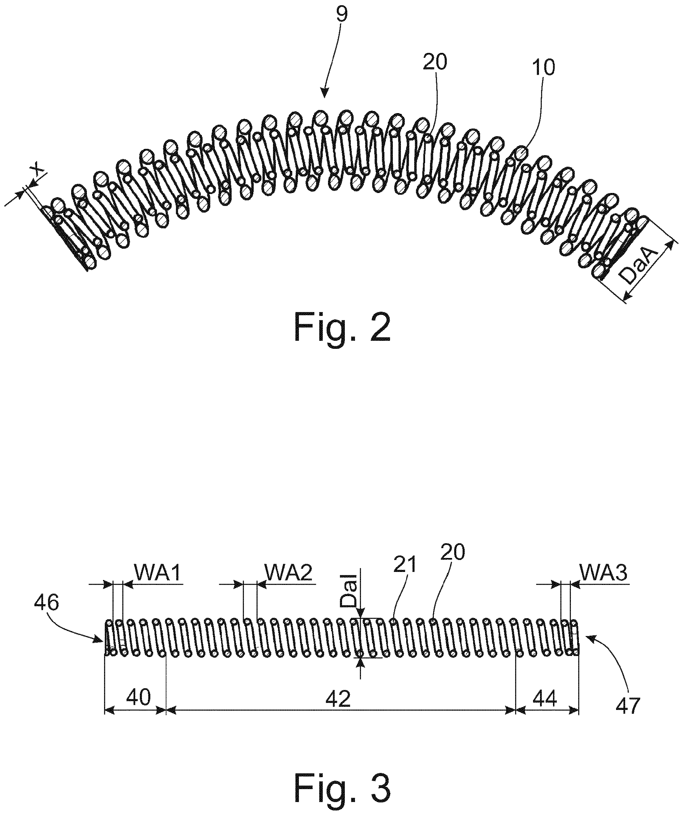

Dabei ist die Schraubendruckfedereinheit 9 besser in der Figur 2 zu sehen. Hier wurde die im nicht verbauten Zustand gerade Innenfeder 20 in die Außenfeder 10 eingesetzt. Hierdurch nimmt die Innenfeder 20 den Krümmungsradius der Außenfeder 10 an. Für die sichere Funktion ist dabei entscheidend, dass die Innenfeder 20 dabei kürzer ist als die Außenfeder 10. Der Grund liegt darin, dass die Außenfeder 10 in dem Federkanal 18 bedingt durch die Fliehkraft und die dadurch entstehende Reibkraft hängen bleiben kann und die Innenfeder austritt. Hierdurch kann es zu zusätzlichen Biegebelastungen und sogar zu einem Verhaken der beiden Federn 10, 20 kommen. Durch eine zu der Auenfeder 10 verkürzte Innenfeder 20 kann dieser Effekt des Austretens bzw. des Verhakens verringert werden, was sich auch vorteilhaft auf die Funktionsfähigkeit und die Lebensdauer auswirken kann. Dabei ist die Innenfeder um einen Wert x kürzer auszuführen, als die Außenfeder. Dabei hat es sich vorteilhaft herausgestellt, wenn der Wert x zwischen 1 % und 9 % des Außendurchmessers der Außenfeder DaA ist.

In der Figur 3 wird die einzelne Innenfeder 20, als gerade Schraubendruckfeder 21 dargestellt. Hierbei ist gut zu erkennen, dass die Innenfeder sich in einen ersten, einen zweiten und in einen dritten Federbereich 40, 42, 44 unterteilt. Dabei befinden sich der erste und der dritte Federbereich 40, 44 an den jeweiligen Federenden 46, 47 wohingegen der zweite Federbereich 42 den mittleren Federbereich umfasst. Dabei zeigt die Figur 3 gut, dass ein Windungsabstand WA2 im zweiten Federbereich 42 nahezu konstant verläuft, wohingegen der Windungsabstand WA1 am ersten Federbereich 40 zu Federende 46 hin geringer wird. Dies ist ebenso mit dem Windungsabstand WA3 am dritten Federbereich 44, der ebenfalls zum Federende 47 hin geringer wird. Ebenso ist hier gut zu erkennen, dass der Außendurchmesser der Innenfeder Dal, gemessen im zweiten Federbereich 42, im Bereich des ersten und des dritten Federbereichs 40, 44 zu den Federenden 46, 47 hin geringer wird.

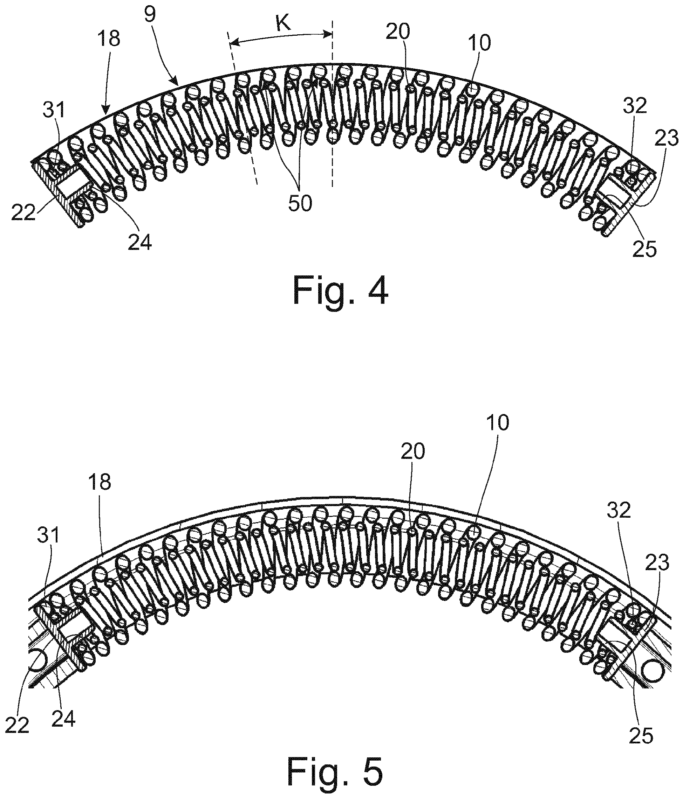

In der Figur 4 und der Figur 5 sind eine Schraubendruckfedereinheit 9 gezeigt, wobei an den jeweiligen Enden der Schraubendruckfedereinheit 9 jeweils ein Federteller 22, 23 vorgesehen ist. Dabei umfasst jeweils der Federteller 22, 23, einen Federtellerzapfen 24, 25, wobei die Federtellerzapfen 24, 25 in den Innendurchmesser der Innenfeder 20 eingreifen und die Innenfeder 20 in Richtung nach radial außen führen. Dabei wird vorausgesetzt, dass die Federteller 22, 23 sich wiederum nach radial außen an dem Federkanal 18, besonders gut in der Figur 5 zu sehen, abstützen. Weiter ist in der Figur 4 gut der Kontaktbereich K der Innenfeder 20 mit der Außenfeder 10 zu erkennen, wobei sich der Kontaktbereich K im mittleren Bereich der Schraubendruckfedereinheit 9 befindet. Hierbei kommen die Außenwindungen der Innenfeder 20 mit den Innenwindungen der Außenfeder 10 in Kontakt, bzw. die Innenfeder 20 stützt sich in diesem Bereich K nach radial außen an der Außenfeder 10 ab. Für den Fall, dass keine Federteller verwendet werden sei hier weiter angemerkt, dass die Außenfeder 10, die ja als Bogenfeder 11 ausgeführt ist, im ausgebauten Zustand mit einem Krümmungsradius versehen sein kann, der geringer ist als der Krümmungsradius des Federkanals 18. Wird nun die gerade Innenfeder 20 in die gekrümmte Außenfeder 10 eingeführt, so wird sich der Krümmungsradius der Außenfeder 10 durch die Innenfeder 20 vergrößern. Dabei ist es vorteilhaft, wenn nach dem Einsetzten der Innenfeder 20 in die Außenfeder 10 der Krümmungsradius der Schraubenfedereinheit 9 dem Krümmungsradius des Federkanals 18 entspricht. Hierdurch können weitere Spannungen an den Federn 10, 20 verringert werden.

Auch ist in der Figur 4 gut zu erkennen, dass die jeweiligen Federendspitzen 31, 32, nach radial außen gerichtet sind. Hierdurch können weiter Spannungen in der Innenfeder 20, vor allem im Betrieb, verringert werden.

### Bezugszeichenliste

- 1: Drehschwingungsdämpfer
- 4: Energiespeicher
- 5: Primärelement
- 8: Sekundärelement
- 9: Schraubendruckfedereinheit
- 10: Außenfeder
- 11: Bogenfeder
- 18: Federkanal
- 20: Innenfeder
- 21: Schraubendruckfeder
- 22: Federteller
- 23: Federteller
- 24: Federtellerzapfen
- 25: Federtellerzapfen
- 31: Federendspitzen
- 32: Federendspitzen
- 40: erster Federbereich
- 42: zweiter Federbereich
- 44: dritter Federbereich
- 46: Federende
- 47: Federende
- 50: Kontaktstelle
- WA1: erster Windungsabstand
- WA2: zweiter Windungsabstand
- WA3: dritter Windungsabstand
- Dal: Außendurchmesser Innenfeder
- DaA: Außendurchmesser Außenfeder
- K: Kontaktbereich

## Patentansprüche

1. Drehschwingungsdämpfer für einen Antriebsstrang eines Kraftfahrzeuges, umfassend ein um eine Drehachse (A) drehbares Primärelement (5) und ein, gegen einen Energiespeicher (4) relativ zu dem Primärelement (5) verdrehbares Sekundärelement (8), wobei der Energiespeicher (4) eine Schraubendruckfedereinheit (9) umfasst, wobei die Schraubendruckfedereinheit (9) in einem Federkanal (18) vorgesehen ist und wobei die Schraubendruckfedereinheit (9) eine Außenfeder (10) umfasst, wobei die Außenfeder (10) als eine Bogenfeder (11) ausgeführt ist und wobei innerhalb der Außenfeder (10) und nahezu koaxial zu der Außenfeder (10) eine Innenfeder (20) vorgesehen ist, wobei die Innenfeder (20) in einem aus der Schraubendruckfedereinheit (9) ausgebauten Zustand als eine gerade Schraubendruckfeder (21) ausgeführt ist, wobei die Innenfeder (20) eine Windungsrichtung hat, die entgegengesetzt zu einer Windungsrichtung der Außenfeder (10) ist und wobei die Innenfeder (20) in einem in dem Drehschwingungsdämpfer eingebauten Zustand um einen Wert x kürzer ist, als die Außenfeder (10), **dadurch gekennzeichnet, dass** der Wert x kleiner oder gleich Außendurchmesser (DaA) der Außenfeder (10) ist.

2. Drehschwingungsdämpfer (1) nach Anspruch 1, **dadurch gekennzeichnet, dass** die Innenfeder (20) im ausgebauten Zustand in einer axialer Staffelung zumindest einen ersten Federbereich (40), einen zweiten Federbereich (42) und einen dritten Federbereich (44) vorsieht, wobei der erste und der dritte Federbereich (40, 44) am jeweiligen Ende der Innenfeder (20) ist und wobei der zweite Federbereich (42) der mittlere Federbereich ist.

3. Drehschwingungsdämpfer (1) nach Anspruch 2, **dadurch gekennzeichnet, dass** der erste Federbereich (40) einen ersten Windungsabstand (WA1) vorsieht und dass der zweite Federbereich (42) einen zweiten Windungsabstand (WA2) vorsieht und dass der dritte Federbereich (44) einen dritten Windungsabstand (WA3) vorsieht, wobei der erste und der dritte Windungsabstand (WA1; WA3) kürzer ist als der zweite Windungsabstand (WA2).

4. Drehschwingungsdämpfer (1) nach Anspruch 3, **dadurch gekennzeichnet, dass** ein Verlauf des ersten, des zweiten oder des dritten Windungsabstands (WA1, WA2, WA3) für den jeweiligen Federbereich (40, 42, 44) konstant oder progressiv oder degressiv ist.

5. Drehschwingungsdämpfer (1) nach Anspruch 3 oder 4, **dadurch gekennzeichnet, dass** ein Außendurchmesser (Dal) des ersten und des dritten Federbereichs (FB1, FB3) der Innenfeder (20) sich zum jeweiligen Federende (46, 47) hin reduziert.

6. Drehschwingungsdämpfer (1) nach einem der Ansprüche 1 bis 5, **dadurch gekennzeichnet, dass** die beiden Federenden der Innenfeder (20) mittels jeweils eines Federtellers (22; 23) radial geführt werden.

7. Drehschwingungsdämpfer (1) nach einem der Ansprüche 1 bis 6, **dadurch gekennzeichnet, dass** die Außenfeder (10) und/oder die Innenfeder (20) durch ein Härteverfahren oberflächenbehandelt sind.

8. Drehschwingungsdämpfer (1) nach Anspruch 7, **dadurch gekennzeichnet, dass** das Härteverfahren ein Nitrierverfahren ist.

9. Drehschwingungsdämpfer (1) nach einem der Ansprüche 1 bis 8, **dadurch gekennzeichnet, dass** zumindest eine der beiden Federendspitzen (31, 32) im eingebauten Zustand sich radial außen befindet oder sich zumindest nahezu radial außen befindet.

10. Drehschwingungsdämpfer (1) nach einem der Ansprüche 1 bis 9, **dadurch gekennzeichnet, dass** die Schraubendruckfedereinheit (9), bestehend aus zumindest der Au-ßenfeder (10) und der Innenfeder (20), im ausgebauten Zustand einen Krümmungsradius hat, der nahezu gleich oder gleich einem Krümmungsradius des Federkanals (8) ist.

11. Drehschwingungsdämpfer (1) nach einem der Ansprüche 1 bis 10, **dadurch gekennzeichnet, dass** ein Abstand zwischen dem Außendurchmesser der Innenfeder (Dal) und dem Innendurchmesser der Außenfeder (10) zwischen 1% und 9% des Außendurchmessers der Außenfeder (DaA) beträgt.

## Claims

1. Torsional-vibration damper for a drivetrain of a motor vehicle, comprising a primary element (5), which is rotatable about an axis of rotation (A), and a secondary element (8), which is rotatable relative to the primary element (5) counter to an energy store (4), wherein the energy store (4) comprises a helical-compression-spring unit (9), wherein the helical-compression-spring unit (9) is provided in a spring channel (18), and wherein the helical-compression-spring unit (9) comprises an outer spring (10), wherein the outer spring (10) is in the form of an bow spring (11), and wherein an inner spring (20) is provided inside the outer spring (10) and virtually coaxially with respect to the outer spring (10), wherein, in a state removed from the helical-compression-spring unit (9), the inner spring (20) is in the form of a straight helical compression spring (21), wherein the inner spring (20) has a winding direction which is opposite to a winding direction of the outer spring (10), and wherein, in a state fitted in the torsional-vibration damper, the inner spring (20) is shorter than the outer spring (10) by a value x, **characterized in that** the value x is less than or equal to the outer diameter (DaA) of the outer spring (10).

2. Torsional-vibration damper (1) according to Claim 1, **characterized in that**, in the removed state, the inner spring (20) provides in an axially staggered arrangement at least a first spring region (40), a second spring region (42) and a third spring region (44), wherein the first and third spring regions (40, 44) are at the respective ends of the inner spring (20), and wherein the second spring region (42) is the middle spring region.

3. Torsional-vibration damper (1) according to Claim 2, **characterized in that** the first spring region (40) provides a first winding spacing (WA1), and **in that** the second spring region (42) provides a second winding spacing (WA2), and **in that** the third spring region (44) provides a third winding spacing (WA3), wherein the first and third winding spacings (WA1, WA3) are shorter than the second winding spacing (WA2) .

4. Torsional-vibration damper (1) according to Claim 3, **characterized in that** a profile of the first, second or third winding spacing (WA1, WA2, WA3) for the respective spring region (40, 42, 44) is constant or progressive or degressive.

5. Torsional-vibration damper (1) according to Claim 3 or 4, **characterized in that** an outer diameter (DaI) of the first and third spring regions (FB1, FB3) of the inner spring (20) is reduced towards the respective spring end (46, 47).

6. Torsional-vibration damper (1) according to one of Claims 1 to 5, **characterized in that** the two spring ends of the inner spring (20) are guided radially by means of in each case one spring plate (22, 23).

7. Torsional-vibration damper (1) according to one of Claims 1 to 6, **characterized in that** the outer spring (10) and/or the inner spring (20) are/is surface-treated by a hardening process.

8. Torsional-vibration damper (1) according to Claim 7, **characterized in that** the hardening process is a nitriding process.

9. Torsional-vibration damper (1) according to one of Claims 1 to 8, **characterized in that**, in the fitted state, at least one of the two spring-end tips (31, 32) is situated radially at the outside or is situated at least virtually radially at the outside.

10. Torsional-vibration damper (1) according to one of Claims 1 to 9, **characterized in that**, in the removed state, the helical-compression-spring unit (9), consisting of at least the outer spring (10) and the inner spring (20), has a radius of curvature which is virtually equal or equal to a radius of curvature of the spring channel (8).

11. Torsional-vibration damper (1) according to one of Claims 1 to 10, **characterized in that** a spacing between the outer diameter of the inner spring (DaI) and the inner diameter of the outer spring (10) amounts to between 1% and 9% of the outer diameter of the outer spring (DaA).

## Revendications

1. Amortisseur de vibrations de torsion pour une chaîne cinématique d'un véhicule automobile, comprenant un élément primaire (5) pouvant tourner autour d'un axe de rotation (A) et un élément secondaire (8) pouvant tourner par rapport à l'élément primaire (5) contre un accumulateur d'énergie (4), l'accumulateur d'énergie (4) comprenant une unité de ressort de compression hélicoïdal (9), l'unité de ressort de compression hélicoïdal (9) étant prévue dans un canal de ressort (18) et l'unité de ressort de compression hélicoïdal (9) comprenant un ressort extérieur (10), le ressort extérieur (10) étant réalisé sous la forme d'un ressort en arc (11) et un ressort intérieur (20) étant prévu à l'intérieur du ressort extérieur (10) et presque coaxialement au ressort extérieur (10), le ressort intérieur (20), dans un état démonté de l'unité de ressort de compression hélicoïdal (9), étant réalisé sous la forme d'un ressort de compression hélicoïdal droit (21), le ressort intérieur (20) ayant une direction d'enroulement qui est opposée à une direction d'enroulement du ressort extérieur (10) et le ressort intérieur (20), dans un état monté dans l'amortisseur de vibrations de torsion, étant plus court d'une valeur x que le ressort extérieur (10), **caractérisé en ce que** la valeur x est inférieure ou égale au diamètre extérieur (DaA) du ressort extérieur (10).

2. Amortisseur de vibrations de torsion (1) selon la revendication 1, **caractérisé en ce que** le ressort intérieur (20), à l'état démonté, prévoit au moins une première zone de ressort (40), une deuxième zone de ressort (42) et une troisième zone de ressort (44) dans un échelonnement axial, la première et la troisième zone de ressort (40, 44) étant à l'extrémité respective du ressort intérieur (20) et la deuxième zone de ressort (42) étant la zone de ressort centrale.

3. Amortisseur de vibrations de torsion (1) selon la revendication 2, **caractérisé en ce que** la première zone de ressort (40) prévoit un premier écart d'enroulement (WA1) et **en ce que** la deuxième zone de ressort (42) prévoit un deuxième écart d'enroulement (WA2) et **en ce que** la troisième zone de ressort (44) prévoit un troisième écart d'enroulement (WA3), le premier et le troisième écart d'enroulement (WA1 ; WA3) étant plus courts que le deuxième écart d'enroulement (WA2).

4. Amortisseur de vibrations de torsion (1) selon la revendication 3, **caractérisé en ce qu'**une évolution du premier, du deuxième ou du troisième écart d'enroulement (WA1, WA2, WA3) est constante, progressive ou dégressive pour la zone de ressort respective (40, 42, 44).

5. Amortisseur de vibrations de torsion (1) selon la revendication 3 ou 4, **caractérisé en ce qu'**un diamètre extérieur (DaI) de la première et de la troisième zone de ressort (FB1, FB3) du ressort intérieur (20) se réduit vers l'extrémité de ressort respective (46, 47).

6. Amortisseur de vibrations de torsion (1) selon l'une quelconque des revendications 1 à 5, **caractérisé en ce que** les deux extrémités de ressort du ressort intérieur (20) sont guidées radialement au moyen d'une plaque de ressort respective (22 ; 23).

7. Amortisseur de vibrations de torsion (1) selon l'une quelconque des revendications 1 à 6, **caractérisé en ce que** le ressort extérieur (10) et/ou le ressort intérieur (20) sont traités en surface par un procédé de durcissement.

8. Amortisseur de vibrations de torsion (1) selon la revendication 7, **caractérisé en ce que** le procédé de durcissement est un procédé de nitruration.

9. Amortisseur de vibrations de torsion (1) selon l'une quelconque des revendications 1 à 8, **caractérisé en ce qu'**au moins l'une des deux pointes de ressort (31, 32) se trouve radialement à l'extérieur ou se trouve au moins presque radialement à l'extérieur à l'état monté.

10. Amortisseur de vibrations de torsion (1) selon l'une quelconque des revendications 1 à 9, **caractérisé en ce que** l'unité de ressort de compression hélicoïdal (9), constituée d'au moins le ressort extérieur (10) et le ressort intérieur (20), a un rayon de courbure à l'état démonté qui est presque égal ou égal à un rayon de courbure du canal de ressort (8).

11. Amortisseur de vibrations de torsion (1) selon l'une quelconque des revendications 1 à 10, **caractérisé en ce qu'**un écart entre le diamètre extérieur du ressort intérieur (DaI) et le diamètre intérieur du ressort extérieur (10) est compris entre 1 % et 9 % du diamètre extérieur du ressort extérieur (DaA).
